# EUROPEAN PATENT APPLICATION

(11) **EP 2 743 481 A1**
(43) Date of publication of application: **18.06.2014**
(21) Application number: 12822316.1
(22) Date of filing: 15.05.2012
(51) Int. Cl.: F02D 29/02, E02F 9/26, F02D 29/00, F02D 45/00

(54) **ENGINE CONTROL SYSTEM FOR WORK MACHINE**

(30) Priority: 08.08.2011 JP 2011173290
(71) Applicant: Hitachi Construction Machinery Co., Ltd., Bunkyo-ku, Tokyo 112-8563 (JP)
(72) Inventor: YOSHIDA Hajime, Tsuchiura-shi, Ibaraki 300-0013 (JP); ISHII Hajime, Tsuchiura-shi Ibaraki 300-0013 (JP)
(74) Representative: Beetz & Partner
(86) International application number: PCT/JP2012/062417
(87) International publication number: WO 2013/021703

(57) **Abstract**

Provided is an engine control system that is used for a working machine and capable of properly measuring the sulfur content of an exhaust gas as sulfur is detrimental to normal functioning of an exhaust gas aftertreatment device and reducing the degree of sulfur poisoning of the exhaust gas aftertreatment device. Each time a key switch (46) is turned ON to start an engine (1), the engine control system compares a remaining fuel amount memorized at the last stop of the engine (1) and a remaining fuel amount detected at the current start of the engine (1). The engine control system performs a sulfur concentration measurement process only when the remaining fuel amount is increased. In this process, the engine control system exercises fixed control to forcibly set a revolution speed of the engine (1) to a target revolution speed Na appropriate for measuring the concentration of sulfur. When the temperature of the exhaust gas is within a predetermined temperature range Texa-Texb appropriate for measuring the sulfur concentration and a target time Ta elapses, the engine control system determines whether the sulfur concentration is not lower than a threshold value. If the sulfur concentration is not lower than the threshold value, the engine control system activates an alarm display device (42).

## Description

### Technical Field

The present invention relates to an engine control system for a hydraulic excavator or other working machine. More specifically, the present invention relates to an engine control system for a working machine having an exhaust gas aftertreatment device (hereinafter referred to as a DPF) that traps particulate matter contained in an exhaust gas from an engine.

### Background Art

Working machines such as a hydraulic excavator, which is a representative example of a construction machine, use a diesel engine as a drive source. Exhaust gas regulations concerning the use of the diesel engine have become more and more stringent every year. Under present circumstances, therefore, a DPF (Diesel Particulate Filter) or other exhaust gas aftertreatment device is provided for the diesel engine in order to comply with the exhaust gas regulations. The DPF is a device that is included in an exhaust system of the diesel engine to trap and remove particulate matter (hereinafter may be referred to as the PM) contained in the exhaust gas. When the DPF is used, it is essential to provide means for burning and eliminating the PM trapped by the DPF and regenerating the DPF (use a regeneration device such as platinum or other metal oxidation catalyst).

An exhaust gas analysis device described in Patent Document 1 is included in an exhaust system of a working machine having the above-described DPF to measure the concentration of sulfur dioxide or other substance in an exhaust gas. Further, an employed fuel is identified by fuel identification means.

### Prior Art Literature

### Patent Document

Patent Document 1: JP, A 2010-65425

### Summary of the Invention

### Problems to be Solved by the Invention

In a working machine that uses a diesel engine, fuels that can be used by a user are limited by regulations concerning the concentration of sulfur in light oil. Acceptable fuel properties are now severely defined as the exhaust gas regulations have become more stringent. In reality, however, there are many cases where the sulfur content of an actually used fuel is above the limit defined by the regulations due, for instance, to improper management exercised during the storage of the fuel.

When a fuel having a high sulfur content is used, the amount of PM discharged from the engine significantly increases t increase the frequency at which the exhaust gas aftertreatment device is regenerated. Further, there is a problem about degradation of the regeneration capability of the exhaust gas aftertreatment device due to sulfur poisoning in which sulfur dioxide or other poisoning substance contained in the exhaust gas deposits on noble metal on the surface of an oxidation catalyst. Furthermore, sulfur poisoning may cause the exhaust gas aftertreatment device to malfunction.

To address the above problems, a technology described in Patent Document 1 uses the exhaust gas analysis device disposed in the exhaust system to measure the concentration of sulfur dioxide or other substance and uses the fuel identification means to identify the employed fuel.

In general, the concentration of sulfur dioxide is measured with a SOx sensor or other detection means. However, if an exhaust temperature is high due, for instance, to an activated working machine or a high engine revolution speed, the concentration of sulfur dioxide cannot be properly measured. As the technology described in Patent Document 1 cannot properly measure the concentration of sulfur dioxide or other substance, it may erroneously detect sulfur dioxide or other substance.

An object of the present invention is to provide an engine control system that is used for a working machine and capable of properly measuring the sulfur content of an exhaust gas as sulfur is detrimental to normal functioning of an exhaust gas aftertreatment device and reducing the degree of sulfur poisoning of the exhaust gas aftertreatment device.

### Means for Solving the Problems

(1) In accomplishing the above object, according to an aspect of the present invention, there is provided an engine control system for a working machine, which is used in an exhaust gas purification system for a hydraulic operating machine having a diesel engine, an exhaust gas aftertreatment device disposed in an exhaust system of the engine, and a hydraulic system including a hydraulic pump driven by the engine and at least one hydraulic actuator driven by a hydraulic fluid discharged from the hydraulic pump. The engine control system includes an exhaust temperature detection device for detecting the temperature of an exhaust gas of the engine, a sulfur concentration detection device for detecting the sulfur concentration in the exhaust gas of the engine, an alarm device, and a control device for performing a sulfur concentration measurement process in accordance with a value detected by the exhaust temperature detection device and with a value detected by the sulfur concentration detection device. If, in the sulfur concentration measurement process, the exhaust gas temperature detected by the exhaust temperature detection device is within a predetermined temperature range appropriate for measuring the sulfur concentration in the exhaust gas, the control device measures the sulfur concentration in the exhaust gas of the engine by using the sulfur concentration detection device. If the measured sulfur concentration is not lower than a predetermined threshold value, the control device activates the alarm device.
   As described above, the sulfur concentration measurement process is performed so as to measure the sulfur concentration in the exhaust gas of the engine while the exhaust gas temperature is within the predetermined temperature range appropriate for measuring the sulfur concentration in the exhaust gas. Therefore, the sulfur concentration in the exhaust gas is properly measured. Further, the alarm device is activated when the properly measured sulfur concentration is not lower than the predetermined threshold value. This makes it possible to minimize the degree of sulfur poisoning of the exhaust gas aftertreatment device, thereby preventing the exhaust gas aftertreatment device from malfunctioning.
(2) According to above (1), further including a key switch for starting the engine and a fuel amount detection device for detecting the amount of remaining fuel to be supplied to the engine. Each time the key switch turns ON to start the engine, the control device compares a remaining fuel amount memorized by the memory device at the last stop of the engine and a remaining fuel amount detected by the fuel amount detection device at the current start of the engine. The control device performs the sulfur concentration measurement process only when the remaining fuel amount is increased.
   As described above, each time the key switch turns ON to start the engine, the remaining fuel amount at the last stop of the engine is compared to the remaining fuel amount at the current start of the engine. The sulfur concentration measurement process is then performed only when the remaining fuel amount is increased. Under normal conditions, refueling is always performed with the engine stopped. Hence, each time the engine starts subsequently to refueling, the sulfur concentration measurement process is performed and determination whether or not to perform the sulfur concentration measurement process is made automatically. Therefore, the sulfur concentration measurement process can be performed only when it is needed. This makes it possible to reduce the frequency at which the sulfur concentration measurement process is performed and minimize a decrease in the operating efficiency of the working machine due to the sulfur concentration measurement process.
(3) According to above (1), further including an engine revolution speed designation device for designating a target revolution speed of the engine. When the sulfur concentration measurement process is not to be performed, the control device exercises normal engine revolution speed control to control the revolution speed of the engine in accordance with the target revolution speed designated by the engine revolution speed designation device. When, on the other hand, the sulfur concentration measurement process is to be performed, the control device exercises fixed control to forcibly set the revolution speed of the engine at a predetermined target revolution speed appropriate for measuring the sulfur concentration in the exhaust gas without regard to the target revolution speed designated by the engine revolution speed designation device.
   As described above, when the sulfur concentration measurement process is to be performed, the control device exercises fixed control to forcibly set the revolution speed of the engine at the predetermined target revolution speed appropriate for measuring the sulfur concentration in the exhaust gas without regard to the target revolution speed designated by the engine revolution speed designation device. This makes it possible to properly maintain the exhaust gas temperature within the predetermined temperature range appropriate for measuring the sulfur concentration in the exhaust gas and enhance the efficiency of the sulfur concentration measurement process and the accuracy of measurement.
(4) According to any one of (1) to (3) mentioned above, wherein, when the sulfur concentration is not lower than the predetermined threshold value, the control device brings the engine to an automatic stop after the lapse of a predetermined period of time.

As the engine is brought to an automatic stop as described above, an operator is strongly urged to replace an employed fuel if it has a high sulfur content. This also makes it possible to minimize the degree of sulfur poisoning of the exhaust gas aftertreatment device.

### Effects of the Invention

The present invention makes it possible to properly measure the sulfur concentration in the exhaust gas, which is detrimental to normal functioning of the exhaust gas aftertreatment device, minimize the degree of sulfur poisoning of the exhaust gas aftertreatment device, and prevent the exhaust gas aftertreatment device from malfunctioning.

Further, under normal conditions, refueling is always performed with the engine stopped. Hence, each time the engine starts subsequently to refueling, the sulfur concentration measurement process is performed. Meanwhile, the present invention automatically determines whether or not to perform the sulfur concentration measurement process. Therefore, the sulfur concentration measurement process can be performed only when it is needed. This makes it possible to reduce the frequency at which the sulfur concentration measurement process is performed and minimize a decrease in the operating efficiency of the working machine due to the sulfur concentration measurement process.

Furthermore, when the sulfur concentration measurement process is to be performed, the present invention exercises fixed control to forcibly set the revolution speed of the engine at the predetermined target revolution speed appropriate for measuring the sulfur concentration in the exhaust gas without regard to the target revolution speed designated by the engine revolution speed designation device. This makes it possible to properly maintain the exhaust gas temperature within the predetermined temperature range appropriate for measuring the sulfur concentration in the exhaust gas and enhance the efficiency of the sulfur concentration measurement process and the accuracy of measurement.

Moreover, the present invention brings the engine to an automatic stop. Therefore, the operator is strongly urged to replace an employed fuel if it has a high sulfur content. This also makes it possible to minimize the degree of sulfur poisoning of the exhaust gas aftertreatment device.

### Brief Description of the Drawings

Fig. 1 is a diagram illustrating the overall configuration of a drive system including an engine control system that is used for a working machine in accordance with a first embodiment of the present invention.
Fig. 2 is an external view of a hydraulic excavator having the drive system shown in Fig. 1.
Fig. 3 is a flowchart illustrating processing steps that are performed by a vehicle control device when it exercises sulfur concentration detection control and engine control.
Fig. 4 is a continuation of the flowchart of Fig. 3, which illustrates processing steps that are performed by the vehicle control device when it exercises sulfur concentration detection control and engine control.
Fig. 5 is a diagram illustrating the relationship between an engine revolution speed and an exhaust gas temperature.

### Mode for Carrying Out the Invention

An embodiment of the present invention will now be described with reference to the accompanying drawings. The embodiment is described below on the assumption that the present invention is applied to a hydraulic excavator, which is a representative example of a working machine (construction machine).

### <First Embodiment>

### ∼ Configuration ∼

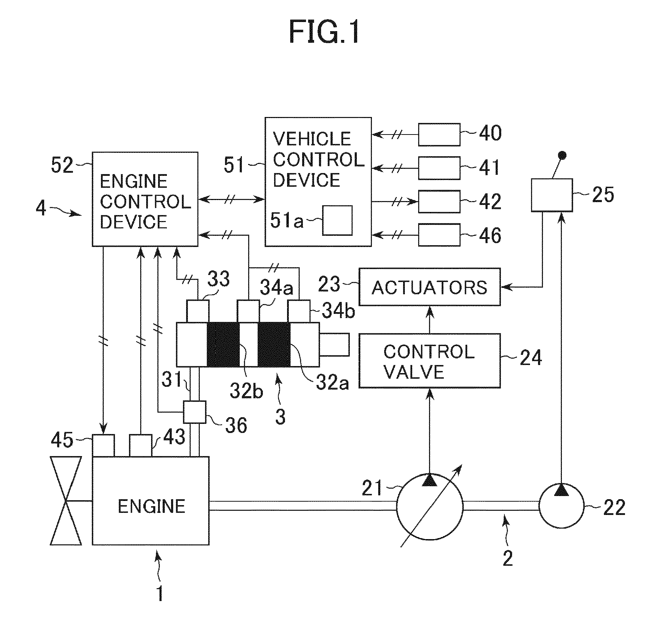

Fig. 1 is a diagram illustrating the overall configuration of a drive system including an engine control system that is used for a working machine in accordance with a first embodiment of the present invention.

Referring to Fig. 1, the drive system for a hydraulic excavator according to the present embodiment includes an engine 1, a hydraulic system 2, an exhaust gas aftertreatment device 3, and an engine control system 4.

The engine 1 is a diesel engine. The engine 1 is provided with a revolution speed detection device 43 which detects the actual revolution speed of the engine 1 and an electronic governor 45 (electronically-controlled fuel injection device) which controls a fuel to be supplied to the engine 1, which constitute a part of the engine control system 4.

The hydraulic system 2 uses the engine 1 as a motive power source to drive a member of the hydraulic excavator that is to be driven. The hydraulic system 2 includes a variable displacement main hydraulic pump 21, a fixed displacement pilot pump 22, actuators 23, a control valve device 24, and an input operating lever device 25. The variable displacement main hydraulic pump 21 and the fixed displacement pilot pump 22 are driven by the engine 1. The actuators 23 are driven by a hydraulic fluid discharged from the hydraulic pump 21 to drive the to-be-driven member of the hydraulic excavator. The control valve device 24 includes main spools (flow control valves) that control the flow (flow rate and direction) of the hydraulic fluid to be supplied from the hydraulic pump 21 to the actuators 23. The input operating lever device 25 includes remote-controlled valves that generate a control pilot pressure for operating the main spools of the control valve device 24 by using the hydraulic fluid from the pilot pump 22 as a hydraulic power source.

The exhaust gas aftertreatment device 3 is mounted on an exhaust pipe 31, which is a part of an exhaust system in which an exhaust gas of the engine 1 flows. The exhaust gas aftertreatment device 3 includes a filter 32a which traps particulate matter (PM) contained in the exhaust gas and an oxidation catalyst 32b which is positioned upstream of the filter 32a. Further, the exhaust gas aftertreatment device 3 includes an exhaust temperature detection device 33 which detects the temperature of the exhaust gas at a location upstream of the filter 32a and exhaust pressure detection devices 34a, 34b which detect a pressure at a location upstream of the filter 32a and at a location downstream of the filter 32a, respectively, all of which constitute a part of the engine control system 4. The exhaust pressure detection devices 34a, 34b constitute a differential pressure detection device for detecting the pressure difference between the upstream side and downstream side of the filter 32a (detecting the pressure loss of the filter 32a).

The engine control system 4 is mounted on the exhaust pipe 31 of the engine 1. The engine control system 4 includes a sulfur concentration detection device 36 which detects the sulfur concentration in the exhaust gas of the engine 1, a fuel amount detection device 40 which detects the amount of fuel, an engine control dial 41 (revolution speed designation device) which designates a target revolution speed of the engine 1, an alarm display device 42, a key switch 46, a vehicle control device 51, and an engine control device 52 in addition to the above-mentioned exhaust temperature detection device 33, exhaust pressure detection devices 34a, 34b, revolution speed detection device 43, and electronic governor 45.

The vehicle control device 51 inputs a detection signal from the exhaust temperature detection device 33, a detection signal from the sulfur concentration detection device 36, a detection signal from the fuel amount detection device 40, a command signal from the engine control dial 41, a detection signal from the revolution speed detection device 43, and a command signal from the key switch 46, performs predetermined arithmetic processing, and outputs a command signal indicative of either the target revolution speed designated by the engine control dial 41 or a target revolution speed for a sulfur concentration measurement process to the engine control device 52. Further, if an employed fuel is determined to have a high sulfur content, the vehicle control device 51 outputs an activation signal to the alarm display device 42. The vehicle control device 51 inputs the detection signal from the exhaust temperature detection device 33, the detection signal from the sulfur concentration detection device 36, and the detection signal from the revolution speed detection device 43 through the engine control device 52.

The engine control device 52 inputs a command signal indicative of the target revolution speed from the vehicle control device 51 and a detection signal indicative of an engine revolution speed from the revolution speed detection device 43, performs predetermined arithmetic processing, and outputs a control signal indicative of a target fuel injection amount to the electronic governor 45. In accordance with the control signal, the electronic governor 45 controls the amount of fuel injected into the engine 1 in such a manner that the revolution speed of the engine 1 is maintained at the target revolution speed indicated by the command signal from the vehicle control device 51.

Further, the engine control device 52 inputs a detection signal from the differential pressure detection device 34a, 34b and exercises control as described below to regenerate the filter 32a (burn and eliminate particulate matter trapped by the filter 32a).

The engine control device 52 determines whether a regeneration start threshold value is exceeded by the differential pressure across the filter 32a, which is indicated by the detection signal from the differential pressure detection device 34a, 34b. If the regeneration start threshold value is exceeded, the engine control device 52 concludes that the filter 32a needs to be regenerated, and starts exercising regeneration control. The regeneration control is exercised, for instance, by injecting the fuel into the exhaust pipe 31 for regeneration purposes. When the fuel is injected into the exhaust pipe 31, part of the injected fuel burns to raise the temperature of the exhaust gas while the unburned fuel is supplied to the oxidation catalyst 32b and oxidized by the oxidation catalyst 32b. Heat of reaction, which is derived from the oxidation, further raises the exhaust gas temperature. The resulting high-temperature exhaust gas burns and eliminates the PM deposited on the filter 32a. The fuel injection for regeneration may be accomplished, for instance, by using an in-cylinder injection system of the engine 1, which is based on the electronic governor 45, in such a manner as to perform an auxiliary injection (post-injection) in which the fuel is injected during an expansion stroke subsequent to a main injection of a multiple injection scheme. An alternative is to mount a regeneration fuel injection device on the exhaust pipe 31 and perform the fuel injection for regeneration by activating the regeneration fuel injection device. This regeneration control is continuously exercised until the differential pressure across the filter 32a, which is indicated by the detection signal from the differential pressure detection device 34a, 34b, drops below a regeneration end threshold value. When the differential pressure across the filter 32a drops below the regeneration end threshold value, the regeneration fuel injection into the exhaust pipe 31 stops to terminate the regeneration control.

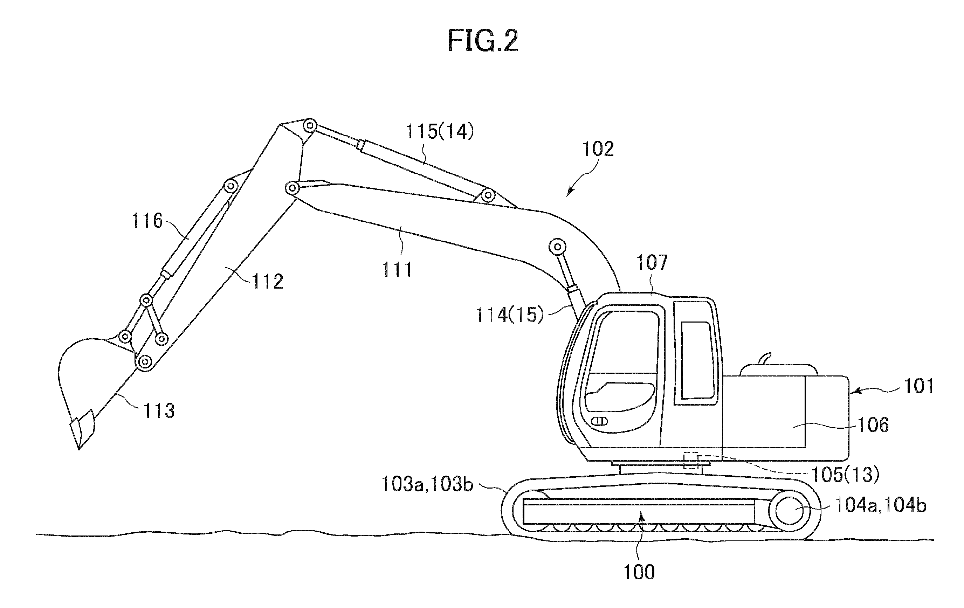

Fig. 2 is an external view of the hydraulic excavator having the drive system shown in Fig. 1. The hydraulic excavator includes a lower travel structure 100, an upper turning structure 101, and a front work device 102. The lower travel structure 100 includes left and right crawler travel devices 103a, 103b and is driven by left and right travel motors 104a, 104b. The upper turning structure 101 is turnably mounted on the lower travel structure 100 and driven by a turning motor 105. The front work device 102 is elevatably mounted on the front of the upper turning structure 101. The upper turning structure 101 includes an engine room 106 and a cabin (operating room) 107. The engine 1, the hydraulic pump 21, the pilot pump 22, the exhaust gas aftertreatment device 3, and the like are disposed in the engine room 106. Input operating levers 25 are disposed on the left and right sides of a cab seat in the cabin 107. The vehicle control device 51 and the engine control device 52 are disposed, for instance, beneath the cab seat in the cabin 107.

The front work device 102 is a multijoint structure having a boom 111, an arm 112, and a bucket 113. The boom 111 pivots in an up-down direction when a boom cylinder 114 expands or contracts. The arm 112 pivots in the up-down direction and in a front-rear direction when an arm cylinder 115 expands or contracts. The bucket 113 pivots in the up-down direction and in the front-rear direction when a bucket cylinder 116 expands or contracts. The left and right travel motors 104a, 104b, the turning motor 105, the boom cylinder 114, the arm cylinder 115, and the bucket cylinder 116 are the actuators 23 shown in Fig. 1.

### ∼ Contents of Control ∼

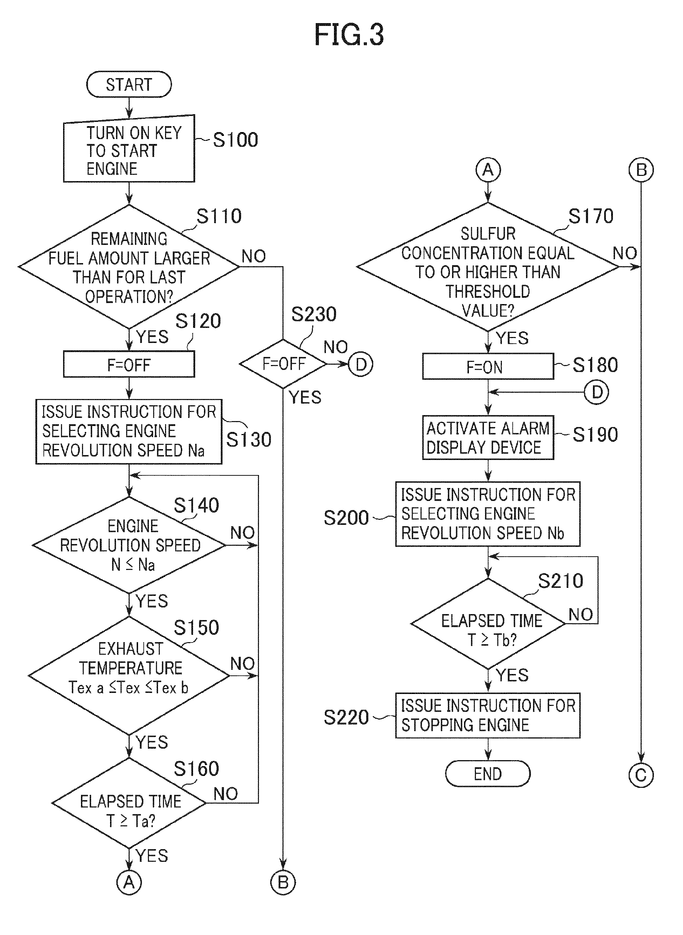

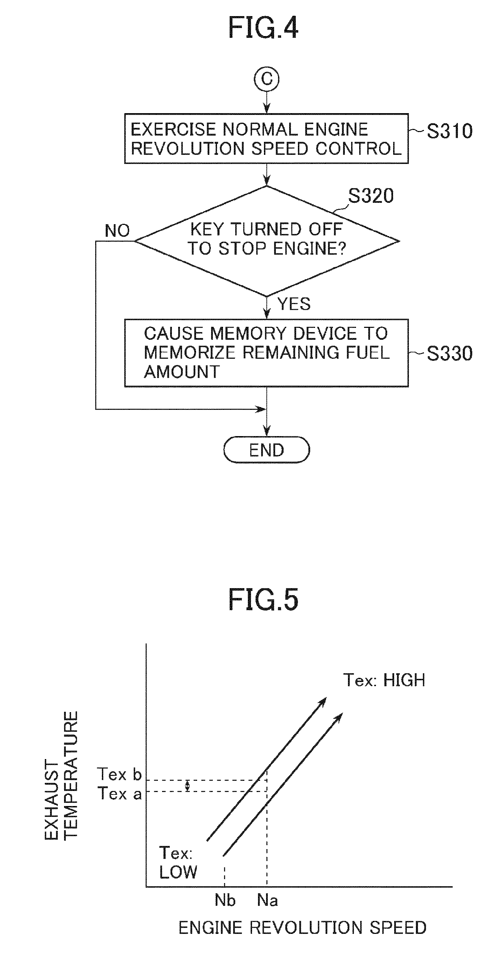

Figs. 3 and 4 are flowcharts illustrating processing steps that are performed by the vehicle control device 51 when it measures the sulfur concentration and exercises engine control.

### <Step S100 (Fig. 3)>

The vehicle control device 51 inputs the command signal of the key switch 46, and starts a program when the key switch 46 turns ON. This initiates the processing steps shown in the flowcharts of Figs. 3 and 4.

### <Step S110 (Fig. 3)>

First of all, the vehicle control device 51 inputs the detection signal from the fuel amount detection device 40 each time the key switch 46 turns ON to start the engine, compares a remaining fuel amount memorized by a memory device 51a of the vehicle control device 51 at the last stop of the engine (see step S330 in Fig. 4) and a remaining fuel amount detected at the current start of the engine, and determines whether the remaining fuel amount is increased in order to determine whether it is necessary to perform the sulfur concentration measurement process.

### <Step S120 (Fig. 3)>

If the remaining fuel amount detected at the current start of the engine is determined in step S110 to be increased, the vehicle control device 51 concludes that the sulfur concentration measurement process needs to be performed, and resets a fuel abnormality flag F to OFF.

### <Step S130 (Fig. 3)>

Next, the vehicle control device 51 performs the sulfur concentration measurement process. In the sulfur concentration measurement process, the vehicle control device 51 first outputs to the engine control device 52 a command signal indicative of a predetermined target revolution speed Na appropriate for measuring the sulfur concentration in the exhaust gas, which is predetermined for the sulfur concentration measurement process. The output of the command signal indicative of the target revolution speed Na takes precedence over a command signal indicative of a target revolution speed that is output from the engine control dial 41. The target revolution speed Na is, for example, a medium revolution speed.

Upon receipt of the command signal indicative of the target revolution speed Na, the engine control device 52 outputs the control signal indicative of the target fuel injection amount to the electronic governor 45 in accordance with the target revolution speed Na and with an actual revolution speed detected by the revolution speed detection device 43. The electronic governor 45 exercises control in accordance with the control signal so that the revolution speed of the engine 1 agrees with the target revolution speed Na. This ensures that, in the sulfur concentration measurement process, fixed control is exercised to forcibly set the revolution speed of the engine 1 to the target revolution speed Na appropriate for measuring the sulfur concentration in the exhaust gas without regard to the target revolution speed designated by the engine control dial 41 (by ignoring the command signal indicative of such a target revolution speed).

### <Step S140 (Fig. 3)>

Next, the vehicle control device 51 inputs the detection signal from the revolution speed detection device 43, compares the target revolution speed Na indicated by the command signal from the vehicle control device 51 to the actual revolution speed N of the engine 1, which is detected by the revolution speed detection device 43, and determines whether the actual revolution speed N of the engine 1 is not higher than the target revolution speed Na. If the actual revolution speed of the engine 1 is determined to be higher than the target revolution speed range Na, step S140 is repeated.

### <Step S150 (Fig. 3)>

Further, the vehicle control device 51 inputs the detection signal from the exhaust temperature detection device 33, compares an exhaust gas temperature Tex detected by the exhaust temperature detection device 33 to a predetermined temperature range Texa-Texb appropriate for measuring the sulfur concentration in the exhaust gas, and determines whether the exhaust gas temperature Tex is within the predetermined temperature range Texa-Texb appropriate for measuring the sulfur concentration in the exhaust gas. If the exhaust gas temperature Tex is determined to be outside the predetermined temperature range Texa-Texb, steps S140 and S150 are repeated.

Fig. 5 is a diagram illustrating the relationship between the engine revolution speed and the exhaust gas temperature. There is a correlation between the engine revolution speed and the exhaust gas temperature. As indicated in figure, the exhaust gas temperature increases with an increase in the engine revolution speed. Further, even when the engine revolution speed remains unchanged, the exhaust gas temperature varies within a predetermined range according to prevailing environmental conditions (ambient temperature, etc.) and vehicle conditions (e.g., the magnitude of engine drag load that depends, for instance, on whether an air-conditioner is used). As indicated in Fig. 5, setting the target revolution speed Na to an appropriate value makes it possible to obtain an exhaust gas temperature that is within the predetermined temperature range Texa-Texb appropriate for measuring the sulfur concentration in the exhaust gas.

### <Step S160 (Fig. 3)>

If the actual revolution speed of the engine 1 is determined in step S140 to be not higher than the target revolution speed range Na and the exhaust gas temperature Texa is determined in step S150 to be within the predetermined temperature range Texa-Texb, the vehicle control device 51 compares the subsequently elapsed time T to a predetermined target time Ta, and determines whether the elapsed time T has reached the target time Ta. If the elapsed time T is determined to have not reached the target time Ta, steps S140, S150, and S160 are repeated.

### <Step S170 (Fig. 3)>

If, on the other hand, the elapsed time T is determined in step S160 to have reached the target time Ta, the vehicle control device 51 inputs the detection signal from the sulfur concentration detection device 36, compares the sulfur concentration in the exhaust gas, which is detected by the sulfur concentration detection device 36, to a predetermined target sulfur concentration (threshold value) in the exhaust gas, and determines whether the sulfur concentration in the exhaust gas is not lower than the target sulfur concentration (threshold value).

### <Step S180 (Fig. 3)>

If, in step S170, the sulfur concentration in the exhaust gas is determined to be not lower than the target sulfur concentration (threshold value), the vehicle control device 51 sets the fuel abnormality flag F to ON.

### <Step S190 (Fig. 3)>

Next, the vehicle control device 51 outputs an activation signal to the alarm display device 42, thereby causing the alarm display device 42 to indicate that the currently used fuel has a high sulfur content and needs to be replaced immediately.

### <Step S200 (Fig. 3)>

Next, in preparation for stopping the engine 1, the vehicle control device 51 outputs to the engine control device 52 a command signal indicative of a target revolution speed Nb appropriate for stopping the engine, which is lower than the aforementioned target revolution speed Na appropriate for measuring the sulfur concentration in the exhaust gas. The output of the command signal indicative of the target revolution speed Nb also takes precedence over a command signal indicative of a target revolution speed that is output from the engine control dial 41. The target revolution speed Nb is, for example, a low idling revolution speed.

The engine control device 52 outputs the control signal indicative of the target fuel injection amount to the electronic governor 45 in accordance with the target revolution speed Nb and with the actual revolution speed detected by the revolution speed detection device 43. The electronic governor 45 exercises control in accordance with the control signal so that the revolution speed of the engine 1 agrees with the target revolution speed Nb. This ensures that control is exercised to set the revolution speed of the engine 1 to the target revolution speed Nb appropriate for stopping the engine without regard to the target revolution speed designated by the engine control dial 41 and by ignoring the command signal supplied from the engine control dial 41 to designate the target revolution speed, when the currently used fuel is determined to have a high sulfur content.

### <Step S210 (Fig. 3)>

Next, the elapsed time T after the output of the command signal indicative of the target revolution speed Nb to the engine control device 52 is compared to a target time Tb to determine whether the elapsed time T has reached the target time Tb.

### <Step S220 (Fig. 3)>

If, in step S210, the elapsed time T is determined to have reached the target time Tb, a stop signal for the engine 1 is output to the engine control device 52 to bring the engine 1 to an automatic stop.

### <Step S230 (Fig. 3)>

If, in step S110, the remaining fuel amount detected at the current start of the engine is determined to have not increased, the vehicle control device 51 concludes that the sulfur concentration measurement process need not be performed. The vehicle control device 51 then determines whether the fuel abnormality flag F is OFF. If the fuel abnormality flag F is not OFF (is ON), it means that the key switch 46 is turned ON to start the engine 1 after the sulfur concentration in the exhaust gas is determined in step S170 to be not lower than the target sulfur concentration (threshold value). Therefore, processing proceeds to step S190 in order to indicate an alarm condition immediately. Further, processing proceeds to steps S200 to S220 in order to output the command signal indicative of the target revolution speed Nb for stopping the engine to the engine control device 52. Then, after the lapse of the target time Tb, the engine 1 is brought to a stop.

### <Step S310 (Fig. 4)>

If, in step S170, the sulfur concentration in the exhaust gas is determined to be lower than the target sulfur concentration (threshold value), or if, in step S230, the fuel abnormality flag F is determined to be OFF, processing proceeds to step S300 in Fig. 4. In step S300, normal engine revolution speed control computation is performed.

In the normal engine revolution speed control computation, the command signal from the engine control dial 41 is input to compute a target revolution speed in accordance with the command signal, and a command signal indicative of the target revolution speed is output to the engine control device 52. In this instance, the vehicle control device 51 may incorporate an additional engine control function such as an automatic idle control function. If such an engine control function is incorporated, either a target revolution speed based on the command signal from the engine control dial 41 or a target revolution speed to the engine control function is output to the engine control device 52 as a command signal.

In accordance with the target revolution speed and with the actual revolution speed detected by the revolution speed detection device 43, the engine control device 52 outputs the control signal indicative of the target fuel injection amount to the electronic governor 45. In accordance with the control signal, the electronic governor 45 exercises control so that the revolution speed of the engine 1 agrees with the target revolution speed.

### <Step S320 (Fig. 4)>

Next, the vehicle control device 51 inputs the command signal of the key switch 46 and determines whether the key switch 46 is turned OFF to stop the engine 1.

### <Step S330 (Fig. 4)>

If, in step S320, the engine 1 is determined to have stopped, the vehicle control device 51 inputs the detection signal from the fuel amount detection device 40 and causes the memory device 51a to memorize the remaining fuel amount detected by the fuel amount detection device 40.

When control is exercised as described above, the vehicle control device 51 and the engine control device 52 constitute a control device that performs the sulfur concentration measurement process in accordance with the value detected by the exhaust temperature detection device 33 and with the value detected by the sulfur concentration detection device 36. In the sulfur concentration measurement process, this control device measures the sulfur concentration in the exhaust gas of the engine 1 by using the sulfur concentration detection device 36 when the exhaust gas temperature detected by the exhaust temperature detection device 33 is within the predetermined temperature range appropriate for measuring the sulfur concentration in the exhaust gas, and activates an alarm device (alarm display device 42) when the measured sulfur concentration is not lower than the predetermined threshold value.

Further, each time the key switch 46 is turned ON for engine startup, the above control device compares the remaining fuel amount memorized by the memory device 51a at the last engine stop and the remaining fuel amount detected by the fuel amount detection device 40 at the current engine start, and performs the sulfur concentration measurement process only when the remaining fuel amount is increased.

Furthermore, when the sulfur concentration measurement process is not to be performed, the above control device exercises normal engine revolution speed control to control the revolution speed of the engine 1 in accordance with the target revolution speed designated by the engine revolution speed designation device (engine control dial 41). When, on the other hand, the sulfur concentration measurement process is to be performed, the above control device exercises fixed control to forcibly set the revolution speed of the engine 1 to the predetermined target revolution speed Na appropriate for measuring the sulfur concentration in the exhaust gas without regard to the target revolution speed designated by the engine revolution speed designation device (engine control dial 41).

Moreover, when the sulfur concentration is not lower than the predetermined threshold value, the above control device brings the engine 1 to an automatic stop after the lapse of the predetermined time Tb.

### ∼ Operation ∼

Operations performed by the present embodiment, which is configured as described above, will now be described.

### <When a normal fuel having a low sulfur content is refueled>

First of all, operations performed when a normal fuel having a low sulfur content is refueled will be described.

When the key switch 46 is first turned ON to start the engine 1 after refueling, since the remaining fuel amount is increased by refueling, the vehicle control device 51 resets the fuel abnormality flag F to OFF to start the sulfur concentration measurement process (steps S100, S110, and S120 in sequence). In this sulfur concentration measurement process, fixed control is exercised to forcibly set the revolution speed of the engine 1 to the target revolution speed Na appropriate for measuring the sulfur concentration in the exhaust gas. Thus, the actual revolution speed of the engine 1 is not higher than the target revolution speed Na, and the exhaust gas temperature Tex is within the predetermined temperature range Texa-Texb appropriate for measuring the sulfur concentration in the exhaust gas. Further, after the lapse of the target time Ta, steps S130, S140, S150, S160, and S170 are sequentially performed to determine whether the sulfur concentration in the exhaust gas is not lower than the target sulfur concentration (threshold value). In the present case where a normal fuel having a low sulfur content is used, the vehicle control device 51 concludes that the sulfur concentration in the exhaust gas is lower than the target sulfur concentration (threshold value), and performs the normal engine revolution speed control computation (step S310). This permits an operator to perform work by moving the hydraulic excavator in a usual manner.

If the operator turns OFF the key switch 46 to stop the engine when the work is to be halted for a lunch break or the like or at the end of each day's operation, the vehicle control device 51 causes the memory device 51a to memorize the prevailing remaining fuel amount detected by the fuel amount detection device 40 (steps S320 and S330 in sequence).

If the operator turns ON the key switch 46 to start the engine 1 at the end of the lunch break or the like or at the beginning of the next day's operation, the remaining fuel amount is not increased because this engine startup is not after refueling. In addition, the fuel abnormality flag F is OFF. Therefore, the vehicle control device 51 immediately performs the normal engine revolution speed control computation (steps S100, S110, S230, and S310 in sequence). This permits the operator to perform work by moving the hydraulic excavator in a usual manner.

The same holds true when the key switch 46 is subsequently turned OFF to stop the engine.

### <When a fuel having a high sulfur content is refueled>

Next, operations performed when a fuel having a high sulfur content is refueled will be described.

When the key switch 46 is first turned ON to start the engine 1 after refueling, since the remaining fuel amount is increased by refueling, the vehicle control device 51 resets the fuel abnormality flag F to OFF to start the sulfur concentration measurement process (steps S100, S110, and S120 in sequence). In this sulfur concentration measurement process, too, fixed control is exercised to forcibly set the revolution speed of the engine 1 to the target revolution speed Na. Thus, the actual revolution speed of the engine 1 is not higher than the target revolution speed Na, and the exhaust gas temperature Tex is within the predetermined temperature range Texa-Texb appropriate for measuring the sulfur concentration in the exhaust gas. Further, after the lapse of the target time Ta, steps S130, S140, S150, S160, and S170 are sequentially performed to determine whether the sulfur concentration in the exhaust gas is not lower than the target sulfur concentration (threshold value). In the present case where a fuel having a high sulfur content is used, the vehicle control device 51 concludes that the sulfur concentration in the exhaust gas is not lower than the target sulfur concentration (threshold value), sets the fuel abnormality flag F to ON, and causes the alarm display device 42 to indicate that the currently used fuel has a high sulfur content and needs to be replaced immediately (steps S180 and S190 in sequence). Further, the vehicle control device 51 decreases the revolution speed of the engine 1 by exercising control to forcibly maintain the revolution speed of the engine 1 at the target revolution speed Nb appropriate for stopping the engine, and stops the engine when the resultant state continues for the target time Tb (steps S200 and S210 in sequence).

Subsequently, if the operator should turn ON the key switch 46 to restart the engine 1, the remaining fuel amount is not increased because this engine startup is not after refueling. In addition, the fuel abnormality flag F is ON. Therefore, the vehicle control device 51 immediately activates the alarm display device 42 to indicate that the currently used fuel has a high sulfur content and needs to be replaced immediately, decreases the revolution speed of the engine 1 by exercising control to forcibly set the revolution speed of the engine 1 to the target revolution speed Nb, and then stops the engine after the lapse of the target time Tb (steps S100, S110, S230, S190, S200, S210, and S220 in sequence). The operator is then forced to replace the currently used fuel because the operator recognizes that the engine 1 cannot be restarted unless the currently used fuel is replaced by a fuel having a low sulfur content.

### - Effects ∼

The present embodiment, which is configured as described above, provides the following advantages.

When the exhaust gas temperature is within the predetermined temperature range appropriate for measuring the sulfur concentration in the exhaust gas, the present embodiment measures the sulfur concentration in the exhaust gas of the engine 1. Therefore, the concentration of the sulfur in the exhaust gas, which is detrimental to normal functioning of the exhaust gas aftertreatment device 3, is properly measured. Further, the present embodiment activates the alarm display device 42 when the properly measured sulfur concentration is not lower than the predetermined threshold value. This makes it possible to minimize the degree of sulfur poisoning of the exhaust gas aftertreatment device 3 and prevent the exhaust gas aftertreatment device 3 from malfunctioning.

Further, the present embodiment compares the remaining fuel amount detected at the last engine stop and the remaining fuel amount detected at the current engine start, and starts the sulfur concentration measurement process only when the remaining fuel amount is increased. Under normal conditions, refueling is performed with the engine 1 stopped. Hence, each time the engine starts subsequently to refueling, the sulfur concentration measurement process is performed and determination whether or not to perform the sulfur concentration measurement process is made automatically. Therefore, the sulfur concentration measurement process can be performed only when it is needed. This makes it possible to reduce the frequency at which the sulfur concentration measurement process is performed and minimize a decrease in the operating efficiency of the working machine due to the sulfur concentration measurement process.

Furthermore, when the sulfur concentration measurement process is to be performed, the present embodiment exercises fixed control to forcibly set the revolution speed of the engine 1 to the predetermined target revolution speed appropriate for measuring the sulfur concentration in the exhaust gas without regard to the target revolution speed designated by the engine control dial 41 (engine revolution speed designation device). This makes it possible to properly maintain the exhaust gas temperature within the predetermined temperature range appropriate for measuring the sulfur concentration in the exhaust gas and enhance the efficiency of the sulfur concentration measurement process and the accuracy of measurement.

Moreover, the present embodiment brings the engine 1 to an automatic stop when the sulfur concentration is high. Therefore, the operator is strongly urged to replace an employed fuel. This also makes it possible to minimize the degree of sulfur poisoning of the exhaust gas aftertreatment device 3.

### ∼ Variations ∼

The above-described embodiment may be variously modified within the spirit of the present invention.

For example, the above-described embodiment compares the remaining fuel amount detected at the last engine stop to the remaining fuel amount detected at the current engine each time the key switch 46 is turned ON to start the engine, and performs the sulfur concentration measurement process only when the comparison indicates that the remaining fuel amount is increased. However, an alternative is to constantly detect the exhaust gas temperature during a normal operation (work) and measure the sulfur concentration only when the exhaust gas temperature is within a predetermined temperature range appropriate for measuring the sulfur concentration. In this alternative case, too, activating the alarm display device 42 in a situation where the sulfur concentration is not lower than a predetermined threshold value makes it possible to properly measure the sulfur concentration in the exhaust gas, minimize the degree of sulfur poisoning of the exhaust gas aftertreatment device 3, and prevent the exhaust gas aftertreatment device 3 from malfunctioning.

Further, the above-described embodiment, which compares the remaining fuel amount detected at the last engine stop to the remaining fuel amount detected at the current engine each time the key switch 46 is turned ON to start the engine and performs the sulfur concentration measurement process only when the comparison indicates that the remaining fuel amount is increased, may be modified so as to provide a switch for the sulfur concentration measurement process and perform the sulfur concentration measurement process by letting the operator manipulate the switch after the start of the engine to issue an instruction for starting the sulfur concentration measurement process.

Furthermore, the above-described embodiment includes the alarm display device 42 as an alarm device and causes the alarm display device 42 to display the description of an alarm condition (indicate that the currently used fuel has a high sulfur content and needs to be replaced immediately). However, an alternative is to use a loudspeaker as an alarm device and give an audio alarm to describe the alarm condition.

### Description of Reference Numerals

- 1: Engine
- 2: Hydraulic system
- 3: Exhaust gas aftertreatment device
- 4: Engine control system
- 21: Hydraulic pump
- 22: Pilot pump
- 23: Actuators
- 24: Control valve device
- 25: Input operating lever device
- 31: Exhaust pipe (exhaust system)
- 32a: Filter
- 32b: Oxidation catalyst
- 33: Exhaust temperature detection device
- 34a, 34b: Exhaust pressure detection device
- 36: Sulfur concentration detection device
- 40: Fuel amount detection device
- 41: Engine control dial
- 42: Alarm display device
- 43: Revolution speed detection device
- 45: Electronic governor
- 46: Key switch
- 51: Vehicle control device
- 51a: Memory device
- 52: Engine control device
- 100: Lower travel structure
- 101: Upper turning structure
- 102: Front work device
- 103a, 103b: Crawler travel device
- 104a, 104b: Left and right travel motor
- 105: Turning motor
- 106: Engine room
- 107: Cabin
- 111: Boom
- 112: Arm
- 113: Bucket
- 114: Boom cylinder
- 115: Arm cylinder
- 116: Bucket cylinder

## Claims

1. An engine control system for a working machine, the engine control system used in an exhaust gas purification system for a hydraulic operating machine having a diesel engine (1), an exhaust gas aftertreatment device (3) disposed in an exhaust system of the engine, and a hydraulic system (2) including a hydraulic pump (21) driven by the engine and at least one hydraulic actuator (23) driven by a hydraulic fluid discharged from the hydraulic pump, the engine control system comprising:
an exhaust temperature detection device (33) for detecting the temperature of an exhaust gas of the engine;
a sulfur concentration detection device (36) for detecting the sulfur concentration in the exhaust gas of the engine;
an alarm device (42); and
a control device (51, 52) for performing a sulfur concentration measurement process in accordance with a value detected by the exhaust temperature detection device and with a value detected by the sulfur concentration detection device;
wherein, if, in the sulfur concentration measurement process, the exhaust gas temperature detected by the exhaust temperature detection device is within a predetermined temperature range appropriate for measuring the sulfur concentration in the exhaust gas, the control device measures the sulfur concentration in the exhaust gas of the engine by using the sulfur concentration detection device; and
wherein, if the measured sulfur concentration is not lower than a predetermined threshold value, the control device activates the alarm device.

2. The engine control system for a working machine according to claim 1, further comprising:
a key switch (46) for starting the engine (1); and
a fuel amount detection device (40) for detecting the amount of remaining fuel to be supplied to the engine;
wherein, each time the key switch turns ON to start the engine, the control device (51, 52) compares a remaining fuel amount memorized by a memory device (51a) at the last stop of the engine and a remaining fuel amount detected by the fuel amount detection device at the current start of the engine, and performs the sulfur concentration measurement process only when the remaining fuel amount is increased.

3. The engine control system for a working machine according to claim 1 or 2, further comprising:
an engine revolution speed designation device (41) for designating a target revolution speed of the engine (1);
wherein, when the sulfur concentration measurement process is not to be performed, the control device (51, 52) exercises normal engine revolution speed control to control the revolution speed of the engine in accordance with the target revolution speed designated by the engine revolution speed designation device; and
wherein, when the sulfur concentration measurement process is to be performed, the control device (51, 52) exercises fixed control to forcibly set the revolution speed of the engine to a predetermined target revolution speed appropriate for measuring the sulfur concentration in the exhaust gas without regard to the target revolution speed designated by the engine revolution speed designation device.

4. The engine control system for a working machine according to any one of claims 1 to 3,
wherein, when the sulfur concentration is not lower than the predetermined threshold value, the control device (51, 52) brings the engine (1) to an automatic stop after the lapse of a predetermined period of time.
